# EUROPEAN PATENT SPECIFICATION

(11) **EP 3 882 575 B1**
(45) Date of publication and mention of the grant of the patent: **16.04.2025**
(21) Application number: 19885389.7
(22) Date of filing: 12.11.2019
(51) Int. Cl.: G01C 21/34, B60W 30/10, G08G 1/0969

(54) **ROUTE SETTING DEVICE, ROUTE SETTING METHOD AND PROGRAM**
ROUTENEINSTELLUNGSVORRICHTUNG, ROUTENEINSTELLUNGSVERFAHREN UND PROGRAMM
DISPOSITIF DE RÉGLAGE D'ITINÉRAIRE, PROCÉDÉ DE RÉGLAGE D'ITINÉRAIRE ET PROGRAMME

(30) Priority: 14.11.2018 JP 2018213529
(43) Date of publication of application: 22.09.2021
(73) Proprietor: GeoTechnologies, Inc., Bunkyo-ku, Tokyo 113-0021 (JP)
(72) Inventor: HIRANO, Sosuke, Tokyo 113-0021 (JP); OOISHI, Junya, Tokyo 113-0021 (JP)
(74) Representative: Gille Hrabal Partnerschaftsgesellschaft mbB Patentanwälte
(86) International application number: PCT/JP2019/044274
(87) International publication number: WO 2020/100868

(56) References cited:
- WO-A1-2017/123232
- CN-A- 105 575 151
- JP-A- 2004 294 142
- JP-A- 2018 087 763
- US-A1- 2018 178 841

## Description

### TECHNICAL FIELD

The present invention relates to a route setting apparatus, a route setting method, a program, and map data.

### BACKGROUND ART

In recent years, technological development for autonomously moving a moving object such as a vehicle to a destination has been promoted. In order to move the moving object autonomously to the destination, it is necessary to set a route for the moving object to move. The technology for setting such a route includes, for example, a technology related to a car navigation apparatus.

Meanwhile, it is not possible for a general car navigation apparatus to set a route within an intersection. However, in the technology disclosed in Patent Document 1, it is disclosed that a traveling trajectory is calculated using an entry lane to an intersection, an exit lane from the intersection, and the center of the intersection. Patent document 2 discloses a method in which geographic information of a location designated for a U-turn is obtained, a level of difficulty of the U-turn is determined, and an operator is assisted with the operation of the U-turn based on the level of difficulty. Patent document 3 discloses a driving assist apparatus of a vehicle which comprises a sensor for detecting a moving object existing around a vehicle and an electronic control unit for performing an attention operation to a driver of the vehicle.

### RELATED DOCUMENT

### PATENT DOCUMENT

[Patent Document 1] Japanese Patent Application Publication No. 2006-273230;
[Patent Document 2] WO 2017 / 123 232 A1;
[Patent Document 3] US 2018 / 178 841 A1.

### SUMMARY OF THE INVENTION

### TECHNICAL PROBLEM

In a case where a moving object travels while turning, the route that is easy for the moving object to pass is different depending on attributes of the moving object. As an example of the problem to be solved by the present invention, a case where, when a moving object moves while turning, the route is changed depending on the attributes of the moving object is exemplified.

### SOLUTION TO PROBLEM

There is provided a route setting apparatus according to claim 1.

There is provided a route setting method according to claim 9.

There is provided a computer program according to claim 10.

### BRIEF DESCRIPTION OF THE DRAWINGS

The above-described objectives and other objectives, features and advantages will be further clarified by the preferred embodiments described below and the accompanying drawings.

Fig. 1 is a diagram illustrating a usage environment of a route setting apparatus according to a first embodiment.
Fig. 2 is a diagram illustrating a functional configuration of the route setting apparatus.
Fig. 3 is a diagram illustrating an example of a hardware configuration of the route setting apparatus.
Fig. 4 is a flowchart illustrating an example of a route setting process performed by the route setting apparatus.
Fig. 5 is a diagram illustrating a first example of a route R set for an intersection.
Fig. 6 is a diagram illustrating a modification example of Fig. 5.
Fig. 7 is a diagram illustrating a second example of the route set for an intersection.
   - Fig. 8 is a diagram illustrating a modification example of Fig. 6 .
   - Fig. 9 is a diagram illustrating a usage environment of a route setting apparatus according to a second embodiment.

### DESCRIPTION OF EMBODIMENTS

Hereinafter, embodiments of the present invention will be described with reference to the drawings. In all drawings, similar components are denoted by the similar reference signs, and description thereof will not be repeated.

### (First Embodiment)

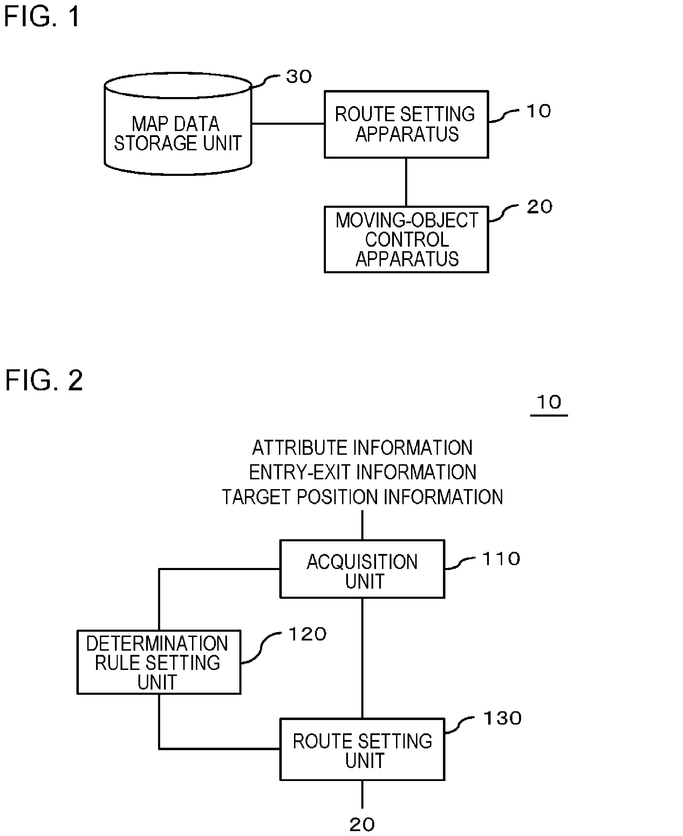

Fig. 1 is a diagram illustrating a usage environment of a route setting apparatus 10 according to a first embodiment. The route setting apparatus 10 is an apparatus that sets a route for causing a moving object to pass through a predetermined portion on a road while turning, and is used together with a map data storage unit 30. The route setting apparatus 10 uses map data stored in the map data storage unit 30 when setting the above-described route. The map data stored in the map data storage unit 30 includes various kinds of information used when the route setting apparatus 10 sets the above-described route.

The moving object is a vehicle. The moving object is, for example, a vehicle that travels on a road, but is not limited to this. In the example shown in Fig.
1, the route setting apparatus 10 is used together with a moving-object control apparatus 20. The moving-object control apparatus 20 is an apparatus that controls the movement of a moving object, and moves the moving object along the route set by the route setting apparatus 10. The moving-object control apparatus 20 is, for example, an autonomous driving control apparatus for a vehicle that is autonomously driven, and is mounted on, for example, a moving object to be controlled. In this case, the route setting apparatus 10 may be located outside the moving object to be controlled, or may be mounted on the moving object as a portion of the moving-object control apparatus 20. Both the route setting apparatus 10 and the moving-object control apparatus 20 may be located outside the moving object.

The map data storage unit 30 may also be mounted on the moving object to be controlled, or may be located outside the moving object. The map data storage unit 30 may be a portion of the route setting apparatus 10. In a case where the moving-object control apparatus 20 and the map data storage unit 30 are installed at a location different from the location of the route setting apparatus 10, the moving-object control apparatus 20 and the map data storage unit 30 communicate with the route setting apparatus 10 via a public communication network such as the Internet. At least a portion of the public communication network is wireless communication.

The predetermined portion on the road is an intersection. In illustrative embodiments which are not encompassed by the appended claims, the predetermined portion may be a portion that is bent by a predetermined angle
(for example, 45°) or larger, or may be a crank. The intersection may be a three-way junction, a four-way junction, or a five-forked road or more. Description will be made below on the assumption that the predetermined portion is an intersection. Even though, in illustrative embodiments which are not encompassed by the appended claims, the predetermined portion may be other than the intersection, the configuration of various kinds of data (including map data) and the operation of the route setting apparatus 10 are the same as those in the examples described below.

Fig. 2 is a diagram illustrating a functional configuration of the route setting apparatus 10. The route setting apparatus 10 includes an acquisition unit 110, a determination rule setting unit 120, and a route setting unit 130.

An acquisition unit 110 acquires attribute information of a moving object, entry-exit information, and target position information. The entry-exit information is information for specifying an entry position to an intersection and an exit position from the intersection. The entry position and the exit position indicated by the entry-exit information may be points or information (for example, line) having a certain area or width. The attribute information of the moving object is information regarding the moving object. The attribute information of the moving object includes, for example, at least one of an overall length, a width, a minimum turning radius, a wheelbase, a front overhang, a rear overhang, and a vehicle type classification of the vehicle. The target position information is information
indicating a target position located in the intersection. The target position indicates a position at least near which a route of the moving object is to pass.

The determination rule setting unit 120 sets a rule (described as a determination rule below) used when a route is determined, by using the attribute information of the moving object. The determination rule is used together with the entry-exit information and the target position information described above. The route setting unit 130 sets the above-described route using the determination rule set by the determination rule setting unit 120, and the entry-exit information and the target position information acquired by the acquisition unit 110.

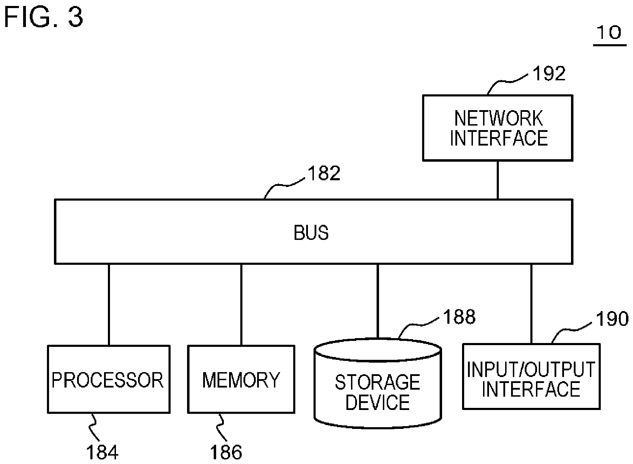

Fig. 3 is a diagram illustrating an example of the hardware configuration of the route setting apparatus 10. The main configuration of the route setting apparatus 10 is realized using an integrated circuit. The integrated circuit includes a bus 182, a processor 184, a memory 186, a storage device 188, an input/output interface 190, and a network interface 192. The bus 182 is a data transmission line for the processor 184, the memory 186, the storage device 188, the input/output interface 190, and the network interface 192 to transmit and receive data to and from each other. A method of connecting the processors 184 and the like to each other is not limited to the bus connection. The processor 184 is an arithmetic processing unit realized using a microprocessor or the like. The memory 186 is a memory realized using a random access memory (RAM) or the like. The storage device 188 is a storage device realized using a read only memory (ROM), a flash memory, or the like.

The input/output interface 190 is an interface for connecting the route setting apparatus 10 to peripheral devices.

The network interface 192 is an interface for connecting the route setting apparatus 10 to a communication network. A method of connecting the network interface 192 to the communication network may be a wireless connection or a wired connection.

The storage device 188 stores a program module for realizing each functional element of the route setting apparatus 10. The processor 184 reads and executes the program module into the memory 186 to realize the functions of the route setting apparatus 10. The storage device 188 may also function as the map data storage unit 30.

The hardware configuration of the integrated circuit described above is not limited to the configuration shown in Fig. 3. For example, the program module may be stored in the memory 186. In this case, the integrated circuit may not include the storage device 188.

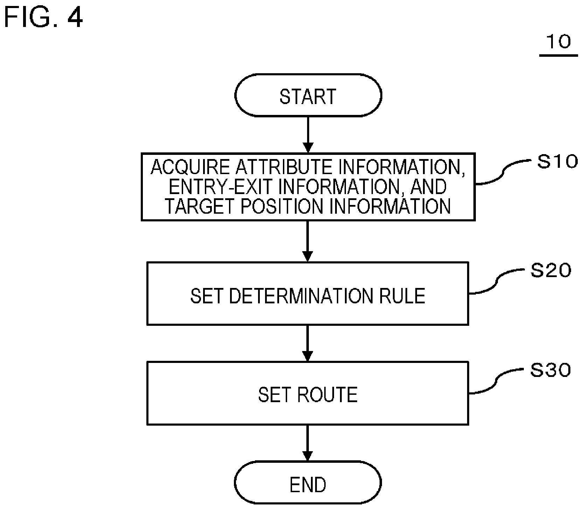

Fig. 4 is a flowchart illustrating an example of a route setting process performed by the route setting apparatus 10. Firstly, the acquisition unit 110 in the route setting apparatus 10 acquires attribute information of a moving object, entry-exit information, and target position information (Step S10 in Fig. 4). A specific example of a method of acquiring each kind of information will be described below.

The attribute information of the moving object is stored in, for example, a storage unit of the route setting apparatus 10. In this case, the acquisition unit 110 reads the attribute information of the moving object from the storage unit.

The attribute information of the moving object may be stored in an external storage device. In this case, the acquisition unit 110 acquires the attribute information of the moving object from the storage device. The external storage device may store the attribute information of the moving object in association with moving-object identification information (for example, number written on a license plate, or vehicle identification number) for identifying the moving object. In this case, the acquisition unit 110 acquires the moving-object identification information and transmits the moving-object identification information to the external storage device. The storage device transmits the attribute information corresponding to the received moving-object identification information to the acquisition unit 110. The moving-object identification information may be stored in advance in the route setting apparatus 10 or may be acquired from the moving-object control apparatus 20.

The acquisition unit 110 acquires the entry-exit information, for example, by using the movement route of the moving object and the map data.

Specifically, in the moving-object control apparatus 20 of the moving object, a movement route connecting a starting point (or the current position) and the target point is set, for example, using a car navigation program. Route information indicating the movement route includes an intersection in which the route to be set by the route setting apparatus 10. Therefore, the route setting apparatus 10 can determine the target intersection by using the route information, and can determine a road (described as an entry road below) on which the moving object travels when entering the intersection, and a road (described as an exit road below) on which the moving object travels when exiting from the intersection.

As described above, the route setting apparatus 10 can use the map data stored in the map data storage unit 30. The map data includes information indicating the lane of the road (for example, the presence/absence of a right turn lane, or the presence/absence of a left turn lane) as information (described as road information below) indicating a road. Therefore, the moving-object control apparatus 20 can determine the lane in which the moving object is to pass in each of the entry road and the exit road, by using the route information and the map data.

In the map data, the road information includes information (described as end information below) indicating the end of the road at the intersection. The acquisition unit 110 acquires the end information on the entry road, as at least a portion of information indicating the entry position, and acquires the end information on the exit road, as at least a portion of information indicating the exit position.

Consider a case where the road information is defined using nodes and links. In this case, the end information indicates the end of the link. The acquisition unit 110 determines the lane in which the moving object is to pass on the entry road, and then recognizes a position corresponding to the end of a link in the lane as the entry position to the intersection. The acquisition unit 110 determines the lane in which the moving object is to pass on the exit road, and then recognizes a position corresponding to the end of a link in the lane as the exit position from the intersection.

The entry-exit information may be input by a passenger of the moving object or a representative of the passenger. In this case, the passenger or the representative inputs the entry-exit information by selecting each of the entry position and the exit position in, for example, the intersection displayed on a display. A device for the input may be a terminal operated by a person who intends to perform an input, or may be a portion of the route setting apparatus 10.

The target position information is stored in, for example, the map data storage unit 30. As described above, the target position information indicates a position at least near which the route of the moving object is to pass. The map data storage unit 30 preferably stores the target position information in association with each intersection. In this case, the acquisition unit 110 acquires the target position information associated with the target intersection.

The target position information may be changed depending on the combination of information for specifying the intersection (or the information for specifying the type of intersection) and the attribute information of the moving object. For example, the target position information is stored for each intersection (or each type of intersection) and for each piece of the attribute information of the moving object. Here, the type of intersection is defined using the number of roads intersecting at the intersection, the number of lanes on each road, the angle at which the roads intersect at the intersection, and the like. In this case, the map data storage unit 30 stores, for example, the target position information for a small vehicle, the target position information for a large vehicle, and the target position information for a trailer at each intersection. In this case, the acquisition unit 110 selects and acquires the target position information corresponding to the attribute information of the moving object among pieces of the target position information associated with the target intersection.

In the above two examples, the target position information may be changed depending on the information for specifying the type of intersection. For example, destination information may be stored for each type of intersection. In this case, the acquisition unit 110 determines the type of the target intersection by using the road information stored in the map data storage unit 30, and acquires the target position information corresponding to the determined type.

In the above three examples, the target position information may be stored further in association with the combination of the entry lane and the exit lane of the moving object. In this case, the acquisition unit 110 determines the entry lane and the exit lane at the target intersection by using movement data and the road information stored in the map data storage unit 30, and acquires the target position information corresponding to the combination of the determined lanes.

The target position information may be stored in association with only the attribute information of the moving object. The acquisition unit 110 selects and acquires the target position information corresponding to the attribute information of the moving object.

Then, the determination rule setting unit 120 sets a determination rule, using the attribute information of the moving object, used when the route is set (Step S20). The determination rule is, for example, a program in which an arithmetic expression is described, and is stored in advance in, for example, the storage unit of the route setting apparatus 10 or the map data storage unit 30. The input to the program includes the entry-exit information and the target position information.

The storage unit described above or the map data storage unit 30 may store a plurality of determination rules in association with the attribute information of the moving object for which the determination rule is to be used. For example, the storage unit described above or the map data storage unit 30 stores a determination rule for a small vehicle, a determination rule for a large vehicle, and a determination rule for a trailer. The determination rule setting unit 120 reads the determination rule corresponding to the attribute information acquired in Step S10, from the storage unit or the map data storage unit 30.

In a case where the above-described arithmetic expression includes at least one parameter, the determination rule setting unit 120 may set the determination rule by determining the value of the parameter using the attribute information acquired in Step S10, and putting the determined value into the above-described program.

In any of the above examples, the storage unit described above or the map data storage unit 30 may store the above-described determination rule in association with each intersection. In this case, the determination rule differs depending on the intersection. The determination rule setting unit 120 reads the determination rule corresponding to the intersection to be processed, from the storage unit described above or the map data storage unit 30. A plurality of intersections may form a set, and one determination rule may be set for the formed set.

The map data storage unit 30 may store the above-described determination rule as a portion of the map data, in a state of corresponding to the attribute information of the moving object and in a state of not being directly linked to the intersection.

Then, the route setting unit 130 sets the route on which the moving object is to move, by inputting the entry-exit information and the target position information into the determination rule set in Step S20 and perform processing (Step S30).

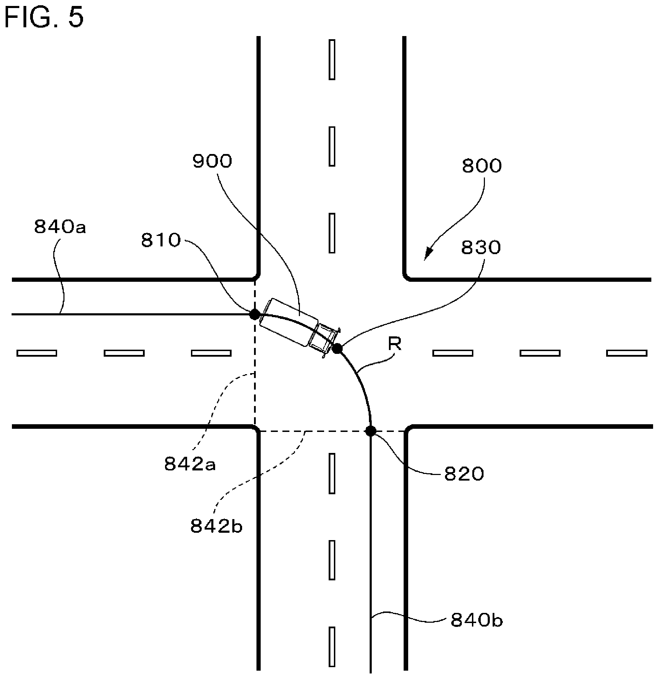

Fig. 5 is a diagram illustrating a first example of a route R set for an intersection 800. The intersection 800 shown in Fig. 5 is a crossroad, and each road has two lanes. The route setting apparatus 10 sets a route R for a moving object 900 to turn right at the intersection.

Specifically, the map data stored in the map data storage unit 30 includes a link 840a of an entry road of the moving object 900, a link 840b of an exit road of the moving object 900, and target position information indicating a target position 830 at the intersection 800. When the intersection 800 is designated, the acquisition unit 110 reads the links 840a and 840b and the target position information from the map data storage unit 30. The acquisition unit 110 recognizes a portion of the traveling lane of the moving object 900 on the entry road, which corresponds to an end 842a of the link 840a on the intersection 800 side, as an entry position 810. The acquisition unit 110 recognizes a portion of the traveling lane of the moving object 900 on the exit road, which corresponds to an end 842b of the link 840b on the intersection 800 side, as an exit position 820.

The route setting unit 130 sets the route R of the moving object 900 to connect the ends 842a and 842b. At this time, the route is set to overlap the target position 830 or to pass near the target position 830.

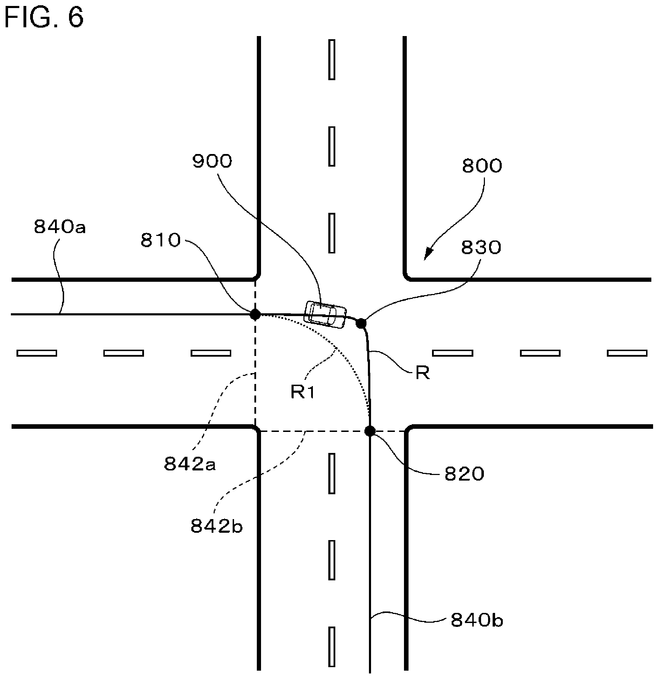

The route R of the moving object 900 differs depending on the position of the target position 830. For example, as shown in Fig. 6, as the target position 830 moves to the outer peripheral side of the intersection 800, the route R also moves to the outside of the intersection 800. Therefore, the route setting apparatus 10 can set the route R appropriate for the moving object 900 by changing the target position 830 in accordance with the attribute of the moving object 900.

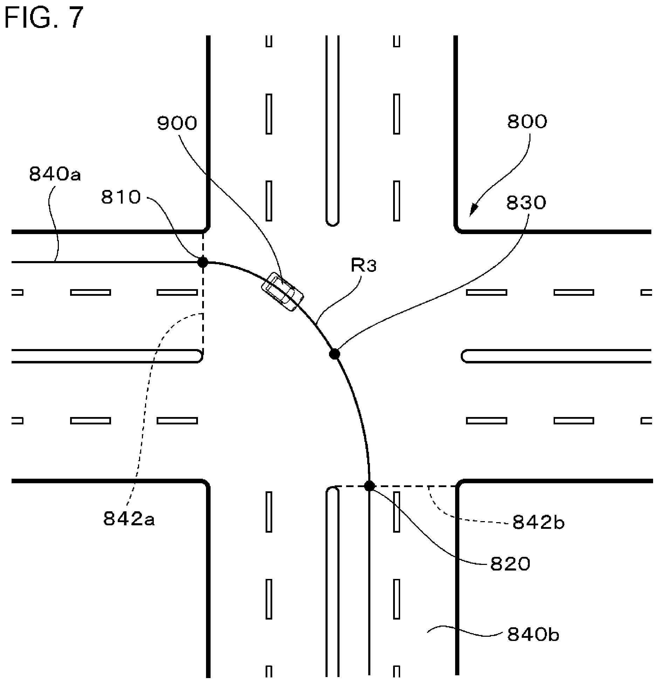

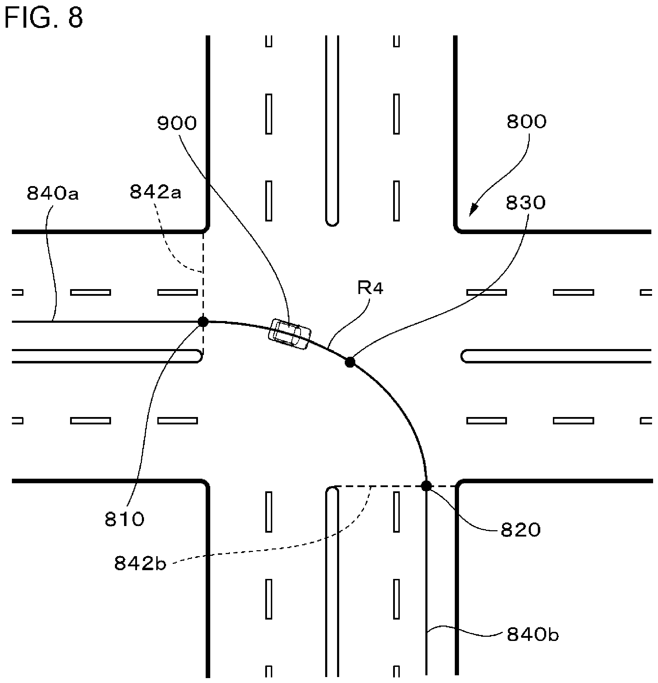

Figs. 7 and 8 are diagrams illustrating a second example of the route set for the intersection 800. In the example shown in Figs. 7 and 8, at least one of the entry road and the exit road to and from the intersection 800 (both in the example shown in Figs. 7 and 8) has a plurality of lanes. The map data stored in the map data storage unit 30 includes such information. The acquisition unit 110 in the route setting apparatus 10 uses the route information indicating the movement route of the moving object 900 to determine the lane in which the moving object 900 passes when entering the intersection 800, and the lane in which the moving object 900 passes when exiting from the intersection 800, and to set the determined lanes as a portion of the entry-exit information. That is, in the example shown in Figs. 7 and 8, the entry-exit information includes information for determining one of the plurality of lanes.

The acquisition unit 110 sets a position at which the determined lane overlaps the end of the link 840, as the entry position or the exit position to or from 8900. As shown in Figs. 7 and 8, when the lane in which the moving object 900 enters the intersection 800 (or the lane in which the moving object 900 exits from the intersection 800) is different, the route R on which the moving object 900 is to pass is also different.

As described above, according to the present embodiment, the route setting apparatus 10 can set a route for causing the moving object 900 to pass through a predetermined portion on a road while turning, in accordance with the attribute of the moving object 900. Thus, the moving object 900 can turn the above-described predetermined portion on the road in a stable state.

### (Second Embodiment)

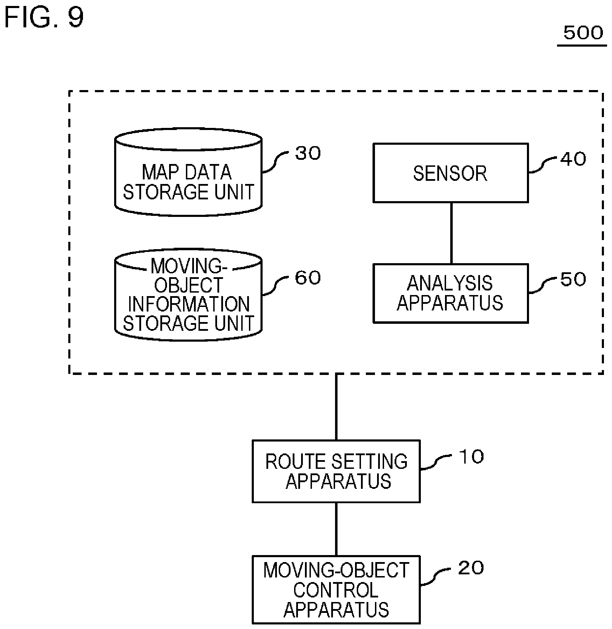

Fig. 9 is a diagram illustrating a usage environment of a route setting apparatus 10 according to a second embodiment. In the example shown in Fig. 9, a moving object 900 includes a sensor 40 and an analysis apparatus 50. The sensor 40 is, for example, a light detection and ranging (LiDAR) or an imaging device. The analysis apparatus 50 analyzes data generated by the sensor 40 to generate information indicating the surrounding state of the moving object 900 (described as surrounding information below). The surrounding information includes the position of a stop line on a road and the position of a line or mark indicating the traveling road drawn in an intersection, in association with information for specifying the type of the line or mark. An acquisition unit 110 in a route setting apparatus 10 generates at least one of target position information and entry-exit information by using the above-described surrounding information.

For example, the route setting apparatus 10 sets a predetermined line or mark to be drawn in an intersection, as a target position. The acquisition unit 110 in the route setting apparatus 10 recognizes the position of the predetermined line or mark described above from the surrounding information, and sets the recognized position as the target position.

The acquisition unit 110 recognizes the position of the stop line of the entry road from the surrounding information and sets the recognized position as an entry position. The acquisition unit 110 sets a start position of a lane for defining the exit road as an exit position.

Also in the present embodiment, similar to the first embodiment, the moving object 900 can turn the above-described predetermined portion on the road in a stable state. Even though the map data storage unit 30 does not store the target position information, the target position information can be generated using the data generated by the sensor 40.

Hitherto, the embodiments and examples have been described above with reference to the drawings, but these are examples of the present invention, and various configurations other than the above description can be adopted.

This application claims priority on the basis of Japanese application Japanese Patent Application No. 2018-213529 filed on November 14, 2018.

### REFERENCE SIGNS LIST

- 10:: route setting apparatus
- 20:: moving-object control apparatus
- 30:: map data storage unit
- 40:: sensor
- 50:: analysis apparatus
- 110:: acquisition unit
- 120:: determination rule setting unit
- 130:: route setting unit
- 800:: intersection
- 810:: entry position
- 820:: exit position
- 830:: target position
- 840, 840a, 840b:: link
- 842a, 842b:: end
- 900:: moving object
- R:: route

## Claims

1. A route setting apparatus (10) that sets a route (R) for causing a moving object (900), namely a vehicle, to pass through a predetermined portion on a road while turning, the apparatus comprising:
an acquisition unit (110) that acquires attribute information of the moving object (900) and target position information indicating a target position (830) located in the predetermined portion; and
a route setting unit (130) that sets the route (R),
**characterized in that** the predetermined portion is an intersection (800), said intersection being a three-way junction, a four-way junction, or a five-forked junction or more, that the acquisition unit (110) acquires entry-exit information for specifying an entry position (810) to the intersection and an exit position (820) from the intersection, that the apparatus comprises a determination-rule setting unit (120) that sets a determination rule using the attribute information, the determination rule corresponding to the intersection to be processed, the determination rule being used when the route (R) is set using the entry-exit information and the target position information; and
wherein the route setting unit (130) sets the route (R) using the determination rule, the entry-exit information, and the target position information.

2. The route setting apparatus (10) according to claim 1, wherein
the road on an entry side to the intersection (800) and/or the road on an exit side includes a plurality of lanes, and
the entry-exit information includes information for specifying one of the plurality of lanes, as information indicating the entry position (810) or the exit position (820).

3. The route setting apparatus (10) according to claim 1 or 2, wherein
the route setting apparatus (10) is capable of using map information,
the map information includes end information indicating a position of an end (842a, 842b) of a lane on the intersection side, the lane being connected to the intersection (800),
the entry position (810) to the intersection (800) and the exit position (820) from the intersection (800) are positions of an end (842a, 842b) of a lane on the intersection side,
the acquisition unit (110) acquires the end information as at least a portion of the entry-exit information, and
the determination rule includes an arithmetic expression for calculating the route (R).

4. The route setting apparatus (10) according to any one of claims 1 to 3, wherein
the attribute information includes at least one of an overall length, a width, a minimum turning radius, a wheelbase, a front overhang, a rear overhang, and a vehicle type classification of the vehicle.

5. The route setting apparatus (10) according to any one of claims 1 to **4,** wherein
the target position information is associated with the attribute information, and
the acquisition unit (110) acquires the target position information corresponding to the attribute information acquired by the acquisition unit (110).

6. The route setting apparatus (10) according to any one of claims 1 to 5, wherein
the determination rule is associated with an attribute of the intersection. and
the acquisition unit (110) further acquires the attribute of the intersection and acquires the determination rule corresponding to the attribute.

7. The route setting apparatus (10) according to any one of claims 1 to 6, wherein the acquisition unit (110) acquires the target position information from a map information storage unit that stores map information.

8. The route setting apparatus (10) according to any one of claims 1 to 6, wherein the target position information is generated using data generated by a sensor (40) attached to the moving object (900).

9. A route setting method of setting a route (R) when a moving object (900), namely a vehicle, passes through a predetermined portion on a road while turning, the method comprising:
by a computer,
acquiring attribute information of the moving object (900) and target position information indicating a target position (830) located in the predetermined portion; and
setting the route (R);
**characterized in that** the predetermined portion is an intersection (800), said intersection being a three-way junction, a four-way junction, or a five-forked junction or more, that the method further comprises acquiring entry-exit information for specifying an entry position (810) to the intersection and an exit position (820) from the intersection;
setting a determination rule using the attribute information, the determination rule corresponding to the intersection to be processed, the determination rule being used when the route is set using the entry-exit information and the target position information;
wherein setting the route (R) is performed using the determination rule, the entry-exit information, and the target position information.

10. A computer program, **characterized in that** the computer program is for causing a computer to perform the steps of claim 9.

## Patentansprüche

1. Eine Routenfestlegungsvorrichtung (10), die eine Route (R) festlegt, um zu bewirken, dass ein sich bewegendes Objekt (900), nämlich ein Fahrzeug, einen vorbestimmten Abschnitt auf einer Straße durchfährt, während es abbiegt, die Vorrichtung umfassend:
eine Erfassungseinheit (110), die Attributinformationen des sich bewegenden Objekts (900) und Zielpositionsinformationen erfasst, die eine Zielposition (830) angeben, die sich in dem vorbestimmten Abschnitt befindet; und
eine Routenfestlegungseinheit (130), die die Route (R) festlegt,
**dadurch gekennzeichnet, dass** der vorbestimmte Abschnitt eine Kreuzung (800) ist, wobei die Kreuzung eine Drei-Wege-Kreuzung, eine Vier-Wege-Kreuzung oder eine fünffach gegabelte Kreuzung oder mehr ist, dass die Erfassungseinheit (110) Eingangs-/Ausgangsinformationen zum Spezifizieren einer Eingangsposition (810) zu der Kreuzung und einer Ausgangsposition (820) von der Kreuzung erfasst, dass die Vorrichtung eine Bestimmungsregel-Festlegungseinheit (120) umfasst, die eine Bestimmungsregel unter Verwendung der Attributinformationen festlegt, wobei die Bestimmungsregel der zu verarbeitenden Kreuzung entspricht, wobei die Bestimmungsregel verwendet wird, wenn die Route (R) unter Verwendung der Eingangs-Ausgangs-Informationen und der Zielpositionsinformationen festgelegt wird; und wobei die Routenfestlegungseinheit (130) die Route (R) unter Verwendung der Bestimmungsregel, der Eingangs-Ausgangs-Information und der Zielpositionsinformation festlegt.

2. Die Routenfestlegungsvorrichtung (10) gemäß Anspruch 1, wobei
die Straße auf einer Eingangsseite zu der Kreuzung (800) und/oder die Straße auf einer Ausgangsseite eine Vielzahl von Fahrspuren enthält, und
die Eingangs-Ausgangs-Informationen Informationen zur Spezifizierung einer der mehreren Fahrspuren enthalten, und zwar als Informationen, die die Eingangsposition (810) oder die Ausgangsposition (820) angeben.

3. Die Routenfestlegungsvorrichtung (10) gemäß Anspruch 1 oder 2, wobei
die Routenfestlegungsvorrichtung (10) in der Lage ist, Karteninformationen zu verwenden,
die Karteninformationen Endinformationen zum Angeben einer Position eines Endes (842a, 842b) einer Fahrspur auf der Kreuzungsseite enthalten, wobei die Fahrspur mit der Kreuzung (800) verbunden ist,
die Eingangsposition (810) in die Kreuzung (800) und die Ausgangsposition (820) aus der Kreuzung (800) Positionen eines Endes (842a, 842b) einer Fahrspur auf der Kreuzungsseite sind,
die Erfassungseinheit (110) die Endinformation als zumindest einen Abschnitt der Eingangs-Ausgangs-Information erfasst, und
die Bestimmungsregel einen arithmetischen Ausdruck zum Berechnen der Route (R) enthält.

4. Die Routenfestlegungsvorrichtung (10) gemäß einem der Ansprüche 1 bis 3, wobei
die Attributinformation mindestens eines enthält aus: einer Gesamtlänge, einer Breite, eines Mindestwenderadius, eines Radstandes, eines vorderen Überhangs, eines hinteren Überhangs und einer Fahrzeugtypklassifizierung des Fahrzeugs.

5. Die Routenfestlegungsvorrichtung (10) gemäß einem der Ansprüche 1 bis **4,** wobei
die Zielpositionsinformationen mit den Attributinformationen verknüpft sind, und
die Erfassungseinheit (110) die Zielpositionsinformationen entsprechend den von der Erfassungseinheit (110) erfassten Attributinformationen erfasst.

6. Die Routenfestlegungsvorrichtung (10) gemäß einem der Ansprüche 1 bis 5, wobei
die Bestimmungsregel mit einem Attribut der Kreuzung verknüpft ist, und
die Erfassungseinheit (110) ferner das Attribut der Kreuzung erfasst und die dem Attribut entsprechende Bestimmungsregel erfasst.

7. Die Routenfestlegungsvorrichtung (10) gemäß einem der Ansprüche 1 bis 6, wobei die Erfassungseinheit (110) die Zielpositionsinformationen von einer Karteninformationsspeichereinheit erfasst, die Karteninformationen speichert.

8. Die Routenfestlegungsvorrichtung (10) gemäß einem der Ansprüche 1 bis 6, wobei die Zielpositionsinformationen unter Verwendung von Daten erzeugt werden, die von einem Sensor (40) erzeugt werden, der an dem sich bewegenden Objekt (900) angebracht ist.

9. Ein Routenfestlegungsverfahren des Festlegens einer Route (R), wenn ein sich bewegendes Objekt (900), nämlich ein Fahrzeug, einen vorbestimmten Abschnitt auf einer Straße durchfährt, während es abbiegt, das Verfahren umfassend:
durch einen Computer,
Erfassen von Attributinformationen des sich bewegenden Objekts (900) und Zielpositionsinformationen, die eine Zielposition (830) angeben, die sich in dem vorbestimmten Abschnitt befindet; und
Festlegen der Route (R);
**dadurch gekennzeichnet, dass** der vorbestimmte Abschnitt eine Kreuzung (800) ist, wobei die Kreuzung eine Drei-Wege-Kreuzung, eine Vier-Wege-Kreuzung oder eine fünffach gegabelte Kreuzung oder mehr ist, dass das Verfahren ferner das Erfassen von Eingangs-Ausgangs-Informationen zum Spezifizieren einer Eingangsposition (810) zu der Kreuzung und einer Ausgangsposition (820) von der Kreuzung umfasst;
Festlegen einer Bestimmungsregel unter Verwendung der Attributinformationen, wobei die Bestimmungsregel der zu verarbeitenden Kreuzung entspricht, wobei die Bestimmungsregel verwendet wird, wenn die Route unter Verwendung der Eingangs-Ausgangs-Informationen und der Zielpositionsinformationen festgelegt wird;
wobei das Festlegen der Route (R) unter Verwendung der Bestimmungsregel, der Eingangs-Ausgangs-Information und der Zielpositionsinformation durchgeführt wird.

10. Ein Computerprogramm, **dadurch gekennzeichnet, dass** das Computerprogramm dazu dient, einen Computer zu veranlassen, die Schritte nach Anspruch 9 durchzuführen.

## Revendications

1. Appareil de définition d'itinéraire (10) qui définit un itinéraire (R) pour faire passer un objet mobile (900), à savoir un véhicule, par une portion prédéterminée sur une route tout en tournant, l'appareil comprenant :
une unité d'acquisition (110) qui acquiert des informations d'attribut de l'objet mobile (900) et des informations de position cible indiquant une position cible (830) située dans la portion prédéterminée ; et
une unité de définition d'itinéraire (130) qui définit l'itinéraire (R),
**caractérisée en ce que** la portion prédéterminée est une intersection (800), ladite intersection étant un carrefour à trois voies, un carrefour à quatre voies ou un carrefour à cinq fourches ou plus, que l'unité d'acquisition (110) acquiert des informations d'entrée-sortie pour spécifier une position d'entrée (810) à l'intersection et une position de sortie (820) de l'intersection, que l'appareil comprend une unité de définition de règle de détermination (120) qui définit une règle de détermination utilisant les informations d'attribut, la règle de détermination correspondant à l'intersection à traiter, la règle de détermination étant utilisée lorsque l'itinéraire (R) est défini utilisant les informations d'entrée-sortie et les informations de position cible ; et
dans lequel l'unité de définition d'itinéraire (130) définit l'itinéraire (R) utilisant la règle de détermination, les informations d'entrée-sortie et les informations de position cible.

2. L'appareil de définition d'itinéraire (10) selon la revendication 1, dans lequel
la route d'un côté d'entrée à l'intersection (800) et / ou la route d'un côté de sortie comprend une pluralité de voies, et
les informations d'entrée-sortie comprennent des informations pour spécifier une parmi la pluralité de voies, en tant qu'informations indiquant la position d'entrée (810) ou la position de sortie (820).

3. L'appareil de définition d'itinéraire (10) selon la revendication 1 ou 2, dans lequel
l'appareil de définition d'itinéraire (10) est capable d'utiliser des informations cartographiques,
les informations cartographiques comprennent des informations d'extrémité indiquant la position d'une extrémité (842a, 842b) d'une voie du côté d'intersection, la voie étant reliée à l'intersection (800),
la position d'entrée (810) dans l'intersection (800) et la position de sortie (820) de l'intersection (800) sont des positions d'une extrémité (842a, 842b) d'une voie du côté d'intersection,
l'unité d'acquisition (110) acquiert les informations d'extrémité comme au moins une portion des informations d'entrée-sortie, et
la règle de détermination comprend une expression arithmétique pour calculer l'itinéraire (R).

4. L'appareil de définition d'itinéraire (10) selon l'une quelconque des revendications 1 à 3, dans lequel
les informations d'attribut comprennent au moins un parmi une longueur totale, une largeur, un rayon de braquage minimal, un empattement, un porte-à-faux avant, un porte-à-faux arrière et une classification de type de véhicule du véhicule.

5. L'appareil de définition d'itinéraire (10) selon l'une quelconque des revendications 1 à 4, dans lequel
les informations de position cible sont associées avec les informations d'attribut, et
l'unité d'acquisition (110) acquiert les informations de position cible correspondant aux informations d'attribut acquises par l'unité d'acquisition (110).

6. L'appareil de définition d'itinéraire (10) selon l'une quelconque des revendications 1 à 5, dans lequel
la règle de détermination est associée avec un attribut de l'intersection, et
l'unité d'acquisition (110) acquiert en outre l'attribut de l'intersection et acquiert la règle de détermination correspondant à l'attribut.

7. L'appareil de définition d'itinéraire (10) selon l'une quelconque des revendications 1 à 6, dans lequel l'unité d'acquisition (110) acquiert les informations de position cible à partir d'une unité de stockage d'informations cartographiques qui stocke des informations cartographiques.

8. L'appareil de détermination d'itinéraire (10) selon l'une quelconque des revendications 1 à 6, dans lequel les informations de position cible sont générées utilisant des données générées par un capteur (40) fixé à l'objet mobile (900).

9. Méthode de définition d'itinéraire de la définition d'un itinéraire (R) lorsqu'un objet mobile (900), à savoir un véhicule, passe par une portion prédéterminée d'une route tout en tournant, la méthode comprenant :
par un ordinateur,
acquérir des informations d'attribut de l'objet mobile (900) et des informations de position cible indiquant une position cible (830) située dans la portion prédéterminée ; et
définir l'itinéraire (R) ;
**caractérisée en ce que** la portion prédéterminée est une intersection (800), ladite intersection étant un carrefour à trois voies, un carrefour à quatre voies ou un carrefour à cinq fourches ou plus,
que la méthode comprend en outre acquérir des informations d'entrée-sortie pour spécifier une position d'entrée (810) à l'intersection et une position de sortie (820) de l'intersection ;
définir une règle de détermination utilisant les informations d'attribut, la règle de détermination correspondant à l'intersection à traiter, la règle de détermination étant utilisée lorsque l'itinéraire est défini utilisant les informations d'entrée-sortie et les informations de position cible ;
dans laquelle définir l'itinéraire (R) est effectué utilisant la règle de détermination, les informations d'entrée-sortie et les informations de position cible.

10. Programme d'ordinateur, **caractérisé en ce que** le programme d'ordinateur est pour amener un ordinateur à effectuer les étapes de la revendication 9.
